# EUROPÄISCHE PATENTANMELDUNG

(11) **EP 1 099 581 A2**
(43) Veröffentlichungstag der Anmeldung: **16.05.2001**
(21) Anmeldenummer: 00123030.9
(22) Anmeldetag: 24.10.2000
(51) Int. Cl.: B60J 5/04

(54) **Seitenaufprallträger**

(30) Priorität: 13.11.1999 DE 19954647
(71) Anmelder: BENTELER AG, D-33104 Paderborn (DE)
(72) Erfinder: Töpker, Dieter, 33100 Paderborn (DE); Kröning, Achim, 33102 Paderborn (DE)
(74) Vertreter: Ksoll, Peter, Dr.-Ing.

(57) **Zusammenfassung**

Die Erfindung betrifft einen Seitenaufprallträger 1 für eine Kraftfahrzeugtür, der auf dem überwiegenden Teil seiner Länge ein im Querschnitt hutförmiges Profil 3, 4 aufweist mit einem Steg 5, 6, zwei Schenkeln 7, 8 und zwei Flanschen 9, 10. Zur Erhöhung der Biegesteifigkeit des einseitig offenen Profils 3, 4 ist dieses durch wenigstens ein die Schenkel 7, 8 verbindendes Zugelement 12 versteift. vorzugsweise ist das Zugelement 12 im mittleren Längenbereich des aus Metallblech bestehenden Profils 3, 4 angeordnet. Als Zugelement 12 können Stäbe oder Seile zum Einsatz gelangen.

## Beschreibung

Die Erfindung betrifft einen Seitenaufprallträger als Verstärkungsbauteil für ein Kraftfahrzeug, insbesondere für eine Fahrzeugtür, gemäß den Merkmalen im Oberbegriff von Anspruch 1.

Seitenaufprallträger dienen dem Schutz der Pkw-Insassen vor Verletzungen bei einem Seitenaufprall. Sie kommen bevorzugt als Türverstärkungen zum Einsatz. In Abhängigkeit von der Stabilität der Grundkonstruktion sollen sie eine hohe Steifigkeit quer zur Fahrtrichtung aufweisen.

Bei Seitenaufprallträgern bekannter Bauart wird eine hohe Steifigkeit in der Regel durch den Einsatz von Rohren aus hochfestem Material erreicht. Ein rohrförmiger Türaufprallträger ist beispielsweise durch die DE 41 33 144 A1 oder die DE 43 04 079 A1 bekannt.

Neben Seitenaufprallträgern aus Rohren gibt es solche aus Blechprofilen (EP 0 662 053 C1). Diese werden meist aus konventionellem Ziehblech gefertigt und weisen eine im Querschnitt hut- oder doppelhutförmige Konfiguration auf. Die hutförmigen Profile besitzen den Vorteil, dass sie nur aus einem Teil bestehen und meist leichter als Rohrausführungen sind. Sie haben jedoch den Nachteil, dass sie einseitig offen sind, worunter die Biegesteifigkeit leidet. Man ist daher dazu übergegangen, die Profile zu schließen. Hierdurch werden die Vorteile eines Rohrs auf das Hutprofil übertragen. Bekannt ist es in diesem Zusammenhang, das Profil über die gesamte Länge oder auch nur partiell über einen bestimmten Bereich zu schließen. Dies führt jedoch wiederum zu einem erhöhten Fertigungsaufwand und einer Gewichtszunahme.

Der Erfindung liegt daher ausgehend vom Stand der Technik die Aufgabe zugrunde, einen Seitenaufprallträger mit hoher Biegesteifigkeit rationeller zu gestalten.

Die Lösung dieser Aufgabe besteht nach der Erfindung in den Merkmalen des Anspruchs 1.

Kerngedanke der Erfindung bildet die Maßnahme, das hutförmige, einseitig offene Profil durch wenigstens ein die Schenkel verbindendes Zugelement zu versteifen. Nicht zwingend, jedoch vorteilhaft durchsetzt das Zugelement die Schenkel.

Diese Maßnahme substituiert das bislang vorgenommene partielle Schließen des Profils. Die Erfindung schafft einen fertigungstechnisch vorteilhaften Seitenaufprallträger mit einer ausreichend hohen Biegesteifigkeit. Je nach Fahrzeugtyp und geforderter Biegesteifigkeit kann die Anzahl der Zugelemente entsprechend variiert werden. Eine Änderung der grundsätzlichen Bauteilgeometrie ist nicht erforderlich. Die mit den Zugelementen verbundene geringfügige Gewichtszunahme ist unschädlich. Gegenüber geschlossenen Profilen lässt der erfindungsgemäße Seitenaufprallträger einen Kostenvorteil erwarten.

Eine vorteilhafte Ausgestaltung des grundsätzlichen Erfindungsgedankens sieht gemäß Anspruch 2 vor, dass das bzw. die Zugelemente im mittleren Längenbereich des Profils angeordnet sind. Hierdurch kann ein annähernd linearer Abfall des Widerstandsmoments von der Mitte ausgehend zu den seitlichen Befestigungen erreicht werden. Damit ergeben sich bei mittige Belastung eines Seitenaufprallträgers annähernd gleiche Biegespannungen entlang seiner gesamten Länge.

Auch wenn grundsätzlich verschiedenartige Ausbildungen des Zugelements denkbar sind, bietet es sich für die Praxis an, das Zugelement entweder durch einen Stab (Anspruch 3) oder durch ein Seil (Anspruch 4) zu bilden.

Solche stab- oder seilförmigen Zugelemente werden durch bei der Herstellung des Seitenaufprallträgers gefertigte Löcher geführt, verspannt und festgelegt. Zweckmäßiger-weise erfolgt die Lochung an der Ausgangsplatine, bevor diese abgepresst wird. Als für die Praxis besonders vorteilhaft wird eine formschlüssige Festlegung der Zugelemente angesehen nach Art einer Schnapp- oder Rastverbindung. Dies kann beispielsweise dadurch erfolgen, dass der Seitenaufprallträger bzw. seine Schenkel unter Vorspannung gestellt und die Zugelemente in entsprechend gestaltete Halteöffnungen eingeführt werden, wo sie nach Entlastung und Rückfederung der Schenkel selbsttätig gehalten werden.

Bei Verwendung eines Seils als Zugelement kann dieses in vorteilhafter Weise gemäß Anspruch 5 in S-förmiger Konfiguration durch mehrere Löcher im Profil gezogen sein.

Bei Mehrfachhutprofilen, welche mindestens zwei Profile aufweisen, die über ihre einander zugewandten Flansche einstückig verbunden sind, durchsetzt das Zugelement beide Profile (Anspruch 6). Hierdurch wird ein zweckopti-mierter Seitenaufprallträger erreicht, der unter Beibehaltung der sonstigen Abmessungen eines offenen Profils eine weit höhere Biegesteifigkeit besitzt.

Die Erfindung ist nachfolgend anhand eines in den Zeichnungen dargestellten Ausführungsbeispiels näher beschrieben. Es zeigen:
- Figur 1: in perspektivischer Darstellungsweise einen Seitenaufprallträger und
- Figur 2: in vergrößerter Darstellungsweise einen Aus-schnitt aus einem erfindungsgemäßen Seitenaufprallträger.

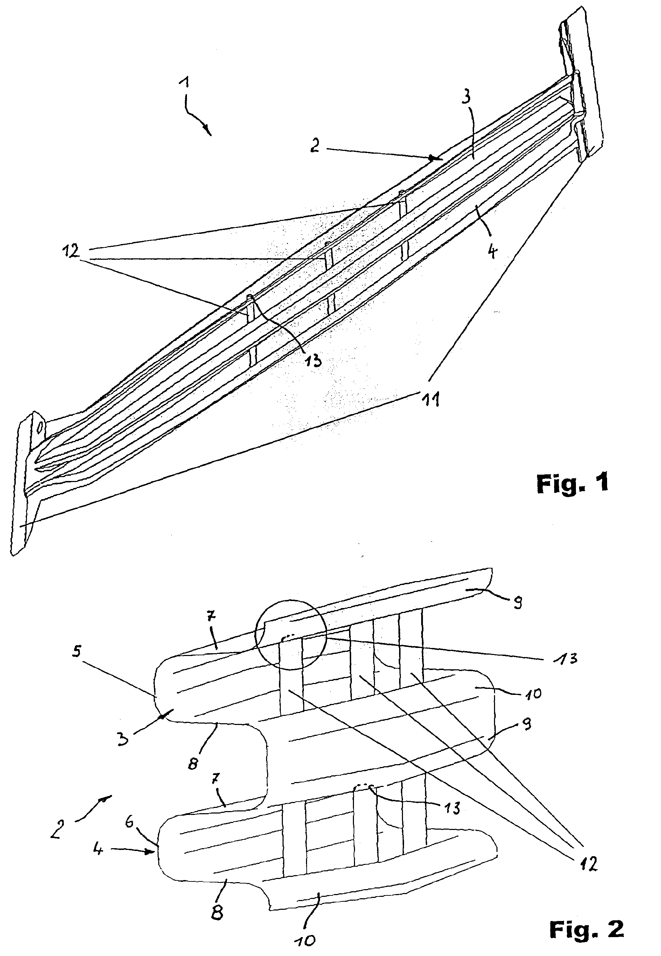

Die Figur 1 zeigt einen Seitenaufprallträger 1, der als Verstärkungsbauteil in einer Kraftfahrzeugtür zum Einsatz gelangt. Man nennt ihn daher auch Türaufprallträger.

Der Seitenaufprallträger 1 besteht aus Metallblech. Das hier dargestellte Ausführungsbeispiel besitzt ein sogenanntes Doppelhutprofil 2, bei dem zwei hutförmige Profile 3, 4, von denen jedes einen Steg 3, zwei seitliche Schenkel 4, 5 und zwei Flansche 6, 7 besitzt, über ihre einander zugewandten Flansche einstückig verbunden sind (siehe hierzu insbesondere Figur 2).

Zur Befestigung des Seitenaufprallträgers 1 in einem Türrahmen ist dieser endseitig jeweils mit einem verbreiterten Anbindungsflansch versehen. Die Profile laufen zu den Enden hin in die Flansche aus.

Um dem Seitenaufprallträger 1 ein optimales Verformungsverhalten mit einer ausreichend hohen Biegesteifigkeit bei geringstmöglichem Materialeinsatz zu geben, sind die Profile 3, 4 durch mindestens ein die Schenkel 7, 8 verbindendes Zugelement 12 versteift. In dem hier dargestellten Ausführungsbeispiel sind drei Zugelemente 12 im mittleren Längenbereich der Profile 3, 4 angeordnet. Grundsätzlich kann die Anzahl und die Ausführung der Zugelemente den jeweiligen Anforderungen eines bestimmten Kraftfahrzeugtyps angepasst werden.

Figur 2 zeigt einen vergrößerten Ausschnitt aus einem Seitenaufprallträger 1. Hieran wird deutlich, dass die beiden Profile 3, 4 des Doppelhutprofils 2 von den Zugelementen 12 durchsetzt sind. Die hierfür erforderliche Lochung 13 der Profile 3, 4 ist nur angedeutet.

Die Zugelemente 12 erhöhen die Biegesteifigkeit des Seitenaufprallträgers 1 wesentlich. Sie können als Volloder Hohlstäbe ausgebildet sein. Für die Praxis interessant ist auch der Einsatz eines Seils als Zugelement 12. Dies kann in S-förmiger Konfiguration durch die Profile 3, 4 geschlungen sein.

Die für die Durchführung der Zugelemente 12 notwendige Lochung 13 erfolgt an der Ausgangsplatine. Diese wird dann zum Seitenaufprallträger 1 umgeformt. Anschließend werden die Zugelemente 12 eingegliedert. Zur Festlegung der Zugelemente 12 am Profil 3 bzw. 4 können diese eine einseitige Verdickung aufweisen, welche beim Durchführen der Zugelemente 12 durch die Lochung 13 am Profil widerlagernd zur Anlage gelangt. Das zweite Ende eines Zugelements 12 wird dann durch eine praktisch gleichartige möglichst einfache Fügeoperation festgelegt, beispielsweise durch eine nietartige Umformung oder eine Aufweitstauchung am zweiten Ende. Möglich ist auch eine Rast- oder Schnappverbindung der Zugelemente 12 an den Schenkeln 7 bzw. 8.

### Bezugszeichenaufstellung

- 1 -: Seitenaufprallträger
- 2 -: Doppelhutprofil
- 3 -: Profil
- 4 -: Profil
- 5 -: Steg
- 6 -: Steg
- 7 -: Schenkel
- 8 -: Schenkel
- 9 -: Flansch
- 10 -: Flansch
- 11 -: Anbindungsflansch
- 12 -: Zugelement
- 13 -: Lochung

## Patentansprüche

1. Seitenaufprallträger für Kraftfahrzeuge, insbesondere für eine Kraftfahrzeugtür, der auf dem überwiegenden Teil seiner Länge ein im Querschnitt hutförmiges Profil (3, 4) aus Metallblech mit einem Steg (5, 6), zwei Schenkeln (7, 8) und zwei Flanschen (9, 10) aufweist, **dadurch gekennzeichnet**, dass das Profil (3, 4) durch wenigstens ein die Schenkel (7, 8) verbindendes Zugelement (12) versteift ist.

2. Seitenaufprallträger nach Anspruch 1, **dadurch gekennzeichnet**, dass das Zugelement (12) im mittleren Längenbereich des Profils angeordnet ist.

3. Seitenaufprallträger nach Anspruch 1 oder 2, **dadurch gekennzeichnet**, dass das Zugelement (12) als Stab ausgebildet ist.

4. Seitenaufprallträger nach Anspruch 1 oder 2, **dadurch gekennzeichnet**, dass das Zugelement (12) als Seil ausgebildet ist.

5. Seitenaufprallträger nach Anspruch 4, **dadurch gekennzeichnet**, dass das Seil in S-förmiger Konfiguration angeordnet ist.

6. Seitenaufprallträger nach einem der Ansprüche 1 bis 5, **dadurch gekennzeichnet**, dass mindestens zwei Profile (3, 4) über ihre einander zugewandten Flansche (9, 10) einstückig verbunden sind und das Zugelement (12) beide Profile (3, 4) durchsetzt.
